# EUROPÄISCHE PATENTSCHRIFT

(11) **EP 4 313 462 B1**
(45) Veröffentlichungstag und Bekanntmachung des Hinweises auf die Patenterteilung: **15.01.2025**
(21) Anmeldenummer: 22717087.5
(22) Anmeldetag: 19.03.2022
(51) Int. Cl.: B23F 23/12, B23F 1/02, B23F 5/04

(54) **VERFAHREN ZUM HARTFEINBEARBEITEN EINER VERZAHNUNG ODER EINES PROFILS EINES WERKSTÜCKS**
METHOD FOR THE HARD FINE MACHINING OF TEETH OR OF A PROFILE OF A WORKPIECE
PROCÉDÉ D'USINAGE PRÉCIS DUR DE DENTS OU D'UN PROFIL D'UNE PIÈCE

(30) Priorität: 29.03.2021 DE 102021107885
(43) Veröffentlichungstag der Anmeldung: 07.02.2024
(73) Patentinhaber: Kapp Niles GmbH & Co. KG, 96450 Coburg (DE)
(72) Erfinder: GÖBEL, Christopher, 96482 Ahorn (DE); GEILERT, Philip, 96482 Ahorn (DE); STEGNER, Achim, 96450 Coburg (DE)
(74) Vertreter: Gosdin, Carstensen & Partner Patentanwälte Partnerschaftgesellschaft mbB
(86) Internationale Anmeldenummer: PCT/EP2022/057260
(87) Internationale Veröffentlichungsnummer: WO 2022/207371

(56) Entgegenhaltungen:
- CH-A1- 716 583
- DE-A1- 102019 104 812
- DE-A1- 4 302 353
- US-A1- 2014 256 223
- US-A1- 2019 339 064

## Beschreibung

Die Erfindung betrifft ein Verfahren zum Hartfeinbearbeiten einer Verzahnung oder eines Profils eines Werkstücks mittels eines Hartfeinbearbeitungswerkzeugs in einer Hartfeinbearbeitungsmaschine, wobei das Werkstück auf einer Werkstückspindel aufgespannt und mit dem Hartfeinbearbeitungswerkzeug bearbeitet wird.

Das Hartfeinbearbeiten, insbesondere in Form des Schleifens, ist bei der Herstellung von Zahnrädern üblich und hat auch beim Einsatz von Zahnrädern in der Elektromobilität eine besondere Bedeutung. Hier muss speziell, wie sonst aber auch, dafür Sorge getragen werden, dass die gefertigte Verzahnung hohen Qualitätsansprüchen genügt. Eine hohe Qualität zeichnet sich insbesondere dadurch aus, dass es im Betrieb der Verzahnung nur zu einer geringen Geräuschentwicklung kommt. Die DE102019104812A1 betrifft ein Verfahren zum Schleifen oder Polieren eines Zahnrads in einer Schleif- oder Poliermaschine, wobei die Maschine zwei Werkstückspindeln zur Aufnahme eines Werkstücks und mindestens eine Schleif- oder Polierspindel mit einem Schleif- oder Polierwerkzeug aufweist. Die DE102019104812A1 offenbart ferner ein Verfahren zum Hartfeinbearbeiten einer Verzahnung oder eines Profils eines Werkstücks gemäß dem Oberbegriff von Anspruch 1.

Demgemäß ist es wesentlich, dass eine ausreichende Prüfung des Schleifergebnisses erfolgt, d. h. die fertigen Zahnräder müssen zumindest stichpunktartig geprüft werden, was die Qualität der geschliffenen Verzahnung anbelangt.

Andererseits besteht die Forderung, den Fertigungsprozess möglichst schnell und damit kostengünstig ausführen zu können.

Der Erfindung liegt die **Aufgabe** zugrunde, ein gattungsgemäßes Verfahren so weiterzuentwickeln, dass es möglich ist, ein hohes Maß an Prüfung gefertigter Werkstücke sicherstellen zu können, hierbei allerdings möglichst ökonomisch zu arbeiten.

Die Lös u n g dieser Aufgabe durch die Erfindung sieht vor, dass bei oder nach der Bearbeitung des Werkstücks in der Hartfeinbearbeitungsmaschine mittels mindestens eines Sensors oder einer Maschinensteuerung mindestens ein Signal aufgenommen und in der Maschinensteuerung gespeichert wird, wobei in der Maschinensteuerung ein Vergleich des gemessenen Signals oder mindestens einer hiervon abgeleiteten Größe mit gespeicherten Referenzdaten (bzw. Grenzdaten oder Grenzwerte relevanter Größen) derart erfolgt, dass geprüft wird, ob das gemessene Signal oder die mindestens eine hiervon abgeleitete Größe innerhalb einer vorgegebenen Toleranz (d. h. innerhalb vorgegebener Grenzen bzw. Grenzwerte, die gegebenenfalls auch einen Sicherheitsbereich beinhalten, der Streuungen berücksichtigt) liegt, und wobei im Falle dessen, dass das gemessene Signal oder die mindestens eine hiervon abgeleitete Größe zumindest teilweise außerhalb der vorgegebenen Toleranz liegt, nach der Bearbeitung des Werkstücks ein Vermessen des Werkstücks mittels einer weiteren Messvorrichtung erfolgt.

Es sei hierzu angemerkt, dass der Begriff der Maschinensteuerung so zu verstehen ist, dass dies nicht zwingend eine in die Maschine integrierte Datenverarbeitungsanlage ist, sondern für den genannten Zweck hierbei auch eine separate Datenverarbeitungseinrichtung (z. B. ein Industrie-PC) zum Einsatz kommt.

Demgemäß kann direkt in der Aufspannung des Werkstücks auf der Werkstückspindel in der Maschine ein schnelles Vermessen erfolgen - insbesondere auch schon bereits während des Schleifens -, welches einen groben Überblick über den erreichten Qualitätsstand verschafft. Wird dabei festgestellt, dass gewisse Toleranzgrenzen verlassen werden, wird das fragliche Werkstück gezielt zu einer nachgelagerten Prüfung verbracht. Als zu erfassendes Signal kommt insbesondere die Schwingung während des Schleifens der Verzahnung in Betracht; diese kann durch einen Schall- oder Beschleunigungssensor erfasst werden. Gleichermaßen können hier aufgenommene Ströme und/oder Drehzahlen der Werkzeug- und/oder Werkstückspindel berücksichtigt werden, welche in der Maschinensteuerung erfasst werden.

Das Vermessen auf der weiteren Messvorrichtung kann dabei innerhalb der Hartfeinbearbeitungsmaschine erfolgen. Hierbei ist insbesondere vorgesehen, dass das Vermessen auf der weiteren Messvorrichtung im auf der Werkstückspindel aufgespannten Zustand des Werkstücks erfolgt. Das Vermessen kann dabei mittels einer maschineneigenen Verzahnungsmesseinrichtung erfolgen. Das Vermessen kann insbesondere mittels eines maschineneigenen Sensors erfolgen, mit dem die Ausrichtung des Werkstücks hinsichtlich der zu bearbeitenden Verzahnung oder des zu bearbeitenden Profils erfolgt (d. h. mit dem Ausrichtsensor).

Das Vermessen auf der weiteren Messvorrichtung kann auch außerhalb der Hartfeinbearbeitungsmaschine erfolgen.

Hinsichtlich des Messvorgangs sind verschiedene Möglichkeiten gegeben: Das Vermessen kann mittels eines taktilen Messtasters erfolgen (demgemäß wird in diesem Falle die hartfeinbearbeitete (geschliffene) Oberfläche des Werkstücks untersucht). Es kann auch mittels eines berührungslosen Sensors erfolgen, insbesondere mittels eines induktiven, eines kapazitiven oder eines optischen Sensors.

Das Vermessen kann weiterhin auf einem Einflankenwälzmessgerät erfolgen; das Einflankenwälzmessgerät kann dabei insbesondere Drehfehler bei der Rotation des Werkstücks erfassen.

Das Vermessen kann auch auf einer Verzahnungsmessmaschine erfolgen, wobei die Vermessung über eine vollständige Werkstückumdrehung vorgenommen wird. Eine hierbei besonders bevorzugte Ausführungsform sieht vor, dass die erfasste Oberfläche der Werkstücke derart analysiert wird, dass Welligkeiten in Form von Amplituden über der Ordnung ermittelt werden (s. unten: FFT-Analyse; alternativ auch z. B. über eine Ausgleichssinusfunktion). Dies kann beispielsweise durch eine Allzahnmessung eines Zahnrades erfolgen.

Eine andere Möglichkeit besteht darin, dass das Vermessen auf einem Getriebeprüfstand erfolgt, wobei in diesem die Schwingungserzeugung des Werkstücks unter Betriebsbedingungen erfasst wird. In diesem Falle kann im Getriebeprüfstand ein mit der Schwingungserzeugung im Zusammenhang stehendes Signal erfasst werden (beispielsweise aufgenommen durch den emittierten Körper- oder Luftschall mittels eines Schall- oder Beschleunigungssensors).

Eine besonders bevorzugte Ausführungsform sieht vor, dass für das mittels des Sensors oder mit der Maschinensteuerung oder für das im Getriebeprüfstand aufgenommene Signal eine Analyse durchgeführt wird, die die Amplitude des Signals, insbesondere einer Schwingung, über der Ordnung ermittelt (Ordnungsanalyse). Die Amplitude der Schwingung über der Ordnung wird dabei bevorzugt dadurch ermittelt, dass eine Fast-Fourier-Transformation (FFT) durchgeführt wird.

Das Hartfeinbearbeitungswerkzeug ist insbesondere ein Schleifwerkzeug und besonders bevorzugt eine Schleifschnecke.

Das vorgeschlagene Konzept stellt also auf ein zweistufiges Messverfahren zur Prüfung der Qualität der Hartfeinbearbeitung ab. Das Messen insbesondere in der Aufspannung des Werkstücks in der Maschine kann mit Sensoren (z. B. mit Beschleunigungssensoren) oder mit Signalen aus der Maschinensteuerung erfolgen, die bereits eine grobe Orientierung darüber liefern, ob das geforderte Toleranzband beim Bearbeiten eingehalten wurde. Wird dieses ausweislich dieser Messung verlassen, erfolgt eine konkrete präzisere Nachvermessung des Bauteils in einer nachgelagerten Messvorrichtung, die insbesondere auch außerhalb der Hartfeinbearbeitungsmaschine angeordnet sein kann. Hier kommt insbesondere auch ein Getriebeprüfstand in Betracht, bei dem eine Prüfung des Zahnrads unter den Bedingungen erfolgen kann, wie sie sich im späteren Betrieb wiederfinden.

Die beschriebene Vorgehensweise überwacht den Hartfeinbearbeitungsprozess effektiv und erkennt eine fehlerhafte Bearbeitung frühzeitig.

In den Figuren ist ein Ausführungsbeispiel der Erfindung dargestellt.
- Fig. 1: zeigt schematisch eine Schleifmaschine, in der ein Zahnrad geschliffen wird, sowie eine nachgelagerte Messvorrichtung für die Messung bzw. Prüfung des geschliffenen Zahnrads,
- Fig. 2: zeigt ein Ablaufdiagramm für die Bearbeitung und Prüfung eines Werkstücks,
- Fig. 3: zeigt ein weiteres Ablaufdiagramm für die Prüfung eines Werkstücks,
- Fig. 4: zeigt aufgenommene Sensorsignale im Zeitbereich,
- Fig. 5: zeigt das Ergebnis einer für das Signal gemäß Fig. 4 durchgeführte Ordnungsanalyse, welches durch eine Fast-Fourier-Transformation (FFT) gewonnen wurde,
- Fig. 6: zeigt den Übergang vom gemessenen Zeitsignal zur Ordnungsanalyse, wobei hier beispielhaft die 18. Ordnung der Schwingung eine besonders hohe Amplitude aufweist,
- Fig. 7: zeigt eine Ordnungsanalyse, nach vorgenommener Änderung des Schleifprozesses, wobei die Amplitude der 18. Ordnung vermindert werden konnte, und
- Fig. 8: zeigt die mit einem Messtaster aufgenommene Abweichung einer Flankenlinie einer Verzahnung von der Idealform über der Zahnhöhe.

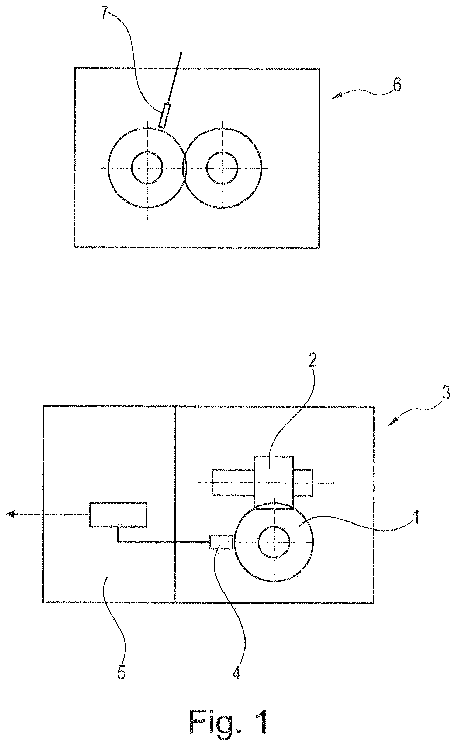

In Figur 1 ist schematisch eine Hartfeinbearbeitungsmaschine 3 in Form einer Schleifmaschine dargestellt, in der ein aufgespanntes Werkstück 1 mittels eines Hartfeinbearbeitungswerkzeugs in Form einer Schleifschnecke 2 bearbeitet wird. In der Maschine 3 ist, benachbart zur geschliffenen Verzahnung des Werkstücks 1, ein Sensor 4 angeordnet, mit dem eine Messung erfolgen kann. Es kann sich dabei um die Vermessung der geschliffenen Verzahnung handeln, aber auch beispielsweise die während des Schleifens aufgenommene Schwingung. Gleichermaßen kann es sich dabei um das Erfassen eines Betriebsparameters der Maschine, wie insbesondere der Strom- bzw. Leistungsaufnahme der Schleifspindel handeln.

Die Maschine 3 verfügt über eine Maschinensteuerung 5, in der unter anderem auch Messdaten des Sensors 4 verarbeitet werden können. Wie oben bereits erläutert, ist unter der Maschinensteuerung im gegebenen Falle auch eine zusätzliche Datenverarbeitungsanlage (z. B. ein Industrie-PC) zu verstehen, die mit der Maschine 3 in Verbindung steht.

Der Maschine 3 nachgelagert bzw. separiert von dieser ist eine weitere Messvorrichtung 6 in Form eines Getriebeprüfstands. In der Messvorrichtung 6 kann ein geschliffenes Werkstück 1 unter Bedingungen untersucht werden, wie sie dem späteren Einsatzfall entsprechen. Die Messvorrichtung 6 weist einen (Körper- oder Luft)Schallsensor 7 auf, mit dem Signale erfasst werden können, wie sie beim Betrieb in der Messvorrichtung vom Werkstück 1 emittiert werden. Es sei angemerkt, dass es sich bei dem Sensor 7 auch um jegliche andere Art von Sensor handeln kann, mit dem das Schwingungsverhalten des Werkstücks 1 erfasst werden kann.

Generell gilt, dass über den Sensor 4 noch in der Aufspannung des Werkstücks 1 auf der Werkstückspindel in der Maschine 3 während oder nach dem Schleifen des Werkstücks 1 eine Messung vorgenommen wird, mit der zumindest Teile der bearbeiteten Oberfläche des Werkstücks 1 vermessen oder ein Maschinenparameter (Betriebsparameter) während des Schleifens gemessen werden. Die Messdaten, die der Sensor 4 liefert, werden in der Maschinesteuerung 5 gespeichert. Hier sind gleichermaßen Referenzdaten hinterlegt, auf Basis derer ein Vergleich erfolgt, ob die gemessenen Werte innerhalb einer vorgegebenen Toleranz liegen. Ist dies der Fall, wird der Fertigungsprozess für weitere Werkstücke unverändert fortgesetzt.

Liegen die gemessenen Daten allerdings zumindest teilweise außerhalb der vorgegebenen Toleranz, erfolgt ein Vermessen der geschliffenen Oberfläche des Werkstücks 1 oder ein Messen von Parametern, die im Betrieb des Zahnrads auftreten, auf der weiteren Messvorrichtung 6. Da hier bevorzugt der spätere Einsatzfall des Werkstücks simuliert werden kann, hat die hier vorgenommene Messung eine höhere Aussagekraft und kann darüber befinden, ob es sich um ein Gut-Teil handelt.

Die Ausgestaltung des vorgeschlagenen Konzepts kann durch eine Vielzahl von weiteren Aspekten variiert bzw. ergänzt werden. Hierzu sei folgendes angemerkt:
Geräuschauffällige Verzahnungen fallen in einem Großteil der Fälle erst im Getriebeprüfstand auf. Die dadurch entstehenden Kosten (insbesondere Demontage, evtl. gesamte Werkstückcharge aussortieren) sind sehr hoch. Eine Möglichkeit, geräuschauffällige Verzahnungen zu detektieren, ist, auf einer Messmaschine eine Allzahnmessung (unter Umständen auch nur für einige Messzähne) durchzuführen. Vermessen werden kann die Flanke, das Profil und die Teilung. Die einzelnen Flanken und Linien können nach einer geeigneten Aneinanderreihung einer nachgelagerten Berechnung (Ordnungsanalyse) unterzogen werden, so dass Welligkeiten auf der Verzahnung beurteilt werden können. Ob diese ermittelten Welligkeiten dann im Getriebe allerdings auch zu einer zu hohen Geräuschentwicklung führen, ist nicht garantiert.

Den bekannten Verfahren ist gemein, dass die Messung außerhalb der Schleifmaschine stattfindet und dass teilweise ein relativ langer Zeitraum vergeht, bevor das Ergebnis vorliegt. Somit besteht die Gefahr, dass bei einem systematischem Fehler Bauteile weiter über einen längeren Zeitraum gefertigt werden, obwohl diese die Anforderungen bezüglich der Welligkeiten nicht erfüllen könnten.

Die Behebung der auffälligen Welligkeiten erfordert einen Eingriff in den Bearbeitungsprozess und anschließend einen erneuten Durchlauf durch den Getriebeprüfstand bzw. eine Allzahnmessung, um die Wirksamkeit der Verbesserungsmaßnahme beurteilen zu können.

Es wird also bei den vorbekannten Verfahren keine direkte Kopplung von Prozesssignalen zu den gemessenen Welligkeiten hergestellt.

Für das Wälzschleifen sei folgender möglicher Fehlerfall genannt: Aufgrund des Abrichtens der Schleifschnecke reduziert sich kontinuierlich der Schneckendurchmesser. Wird dann noch mit einer identischen Schnittgeschwindigkeit gearbeitet, ändert sich entsprechend die Drehzahl der Werkzeug- und folglich auch die der Werkzeugachse. Somit kann die Maschine in ein "ungünstiges" Drehzahlverhältnis laufen (z. B. in eine Resonanz der Maschine, d. h. eine ganzzahlige Schwingung wird auf das Werkstück eingeprägt). Dadurch werden einzelne oder alle Teile, die mit diesen Einstellungen geschliffen werden, geräuschauffällig. Wird zufälligerweise ein Werkstück dieser Charge "Allzahnvermessen", kann unter Umständen der Fehler detektiert und die Bearbeitung gestoppt werden. Wird kein Teil gemessen oder es sind nicht alle Werkstücke der Charge auffällig, werden alle "Problemteile" im Getriebe verbaut. Fehlerfälle, die nicht systematisch sind (beispielsweise aufgrund des Rohteils) können mit vorbekannten Methoden gar nicht bzw. nur zufällig ermittelt werden.

Für das Profilschleifen sei folgender Fehlerfall genannt: Beim Profilschleifen verschleißt kontinuierlich die Schleifscheibe beim Schlichten. Somit ergeben sich Teilungsabweichungen zwischen den einzelnen geschliffenen Lücken. Daher wird beim Schlichten diskontinuierlich geteilt, so dass sich die Teilungssprünge über den Umfang gleichmäßig verteilen. Diese Teilungssprünge können je nach Verteilung im Getriebe unterschiedlich zu Geräuschen anregen. Im Gegensatz zum Wälzschleifen wird bei der Überwachung der Prozesssignale der Verschleiß der Schleifscheibe betrachtet (beispielsweise die Reduzierung des Mittelwerts der Spindelleistung je Hub (hierbei ist zu berücksichtigen, dass in der Regel anfangs die Spindelleistung durch ein Zurücksetzten der Bindungen der Schleifscheibe abfällt und anschließend durch ein Abflachen und Stumpferwerden der einzelnen Schleifkörner die Spindelleistung steigt, bevor einzelne Körner herausbrechen und die Spindelleistung wieder abfällt). Dieses Abweichen gehört zu den niederfrequenten Abweichungen und kann durch einen Vergleich der Ausrichtsignale vor und nach der Bearbeitung detektiert werden. Auch ist ein Abgleich zwischen der Strategie der diskontinuierlich verteilten Schlichthübe und der Teilungsmessung möglich.

Ziel ist daher eine prozesssichere Überwachung des bearbeiteten Werkstücks hinsichtlich Geräuschauffälligkeiten, ohne das Werkstück erst im Getriebeprüfstand oder auf einer externen Messmaschine messen zu müssen. Hierbei können Beschleunigungsaufnehmer und sonstige maschinenübliche Sensoren (Messtaster, steuerungsinterne Signale) verwendet werden.

Ebenso kann auch der Geräuschprüfstand direkt im verketteten Betrieb mit der Maschine arbeiten, an dem eine 100-Prozent-Überprüfung der Bauteile bezüglich Geräusche gewährleistet wird. Alternativ können Bauteile, die über einem Grenzwert oder in einem definierten Intervall liegen, automatisiert an den verketteten Geräuschprüfstand (weitere Messvorrichtung) übergeben werden. Nach einer Ausführungsform fließen die Messergebnisse des Prüfstandes direkt zurück in die Schleifmaschine und gleichen diese Ergebnisse mit den Kennzahlen des Schleifprozesses ab, um so eine Optimierung des Verfahrens bzw. des Algorithmus zu ermöglichen.

Die Schleifmaschine kommuniziert vorteilhaft mit dem Getriebeprüfstand, dem Einflankenwälzprüfgerät und/oder der Verzahnungsmessmaschine hinsichtlich Geräuschauffälligkeiten.

Über eine Teilerückverfolgung und ein Datenbankkonzept können schon bearbeitete Werkstücke im Nachgang auf vorher unbekannte Geräuscheffekte untersucht werden.

Generell angestrebt wird eine (inline) 100-Prozent-Überwachung des Wälz- bzw. Profilschleifprozesses zur Prognostizierung geräuschauffälliger Zahnräder für Fahrzeuggetriebe, insbesondere bei E-Antrieben. Hierbei spielen die Messung und Bewertung ausgewählter Signale eine besondere Rolle. Vorgesehen werden kann dabei die Verarbeitung der gemessenen Signale zu Kennwerten, die insbesondere auf die Werkstückumdrehung bei der Bearbeitung bezogen sind (d. h. es erfolgt eine Ordnungsanalyse). Aus den Kennwerten kann ein Geräuschindex pro Werkstück gebildet werden, der zur Bewertung der Geräuschauffälligkeit dient.

Bei Geräuschauffälligkeit wird zur Absicherung nach der Bearbeitung eine Messung und Bewertung der Zahnflanken und Profile in der weiteren Messvorrichtung vorgenommen. Dabei kann es sich um die maschineneigenen Verzahnungsmesseinrichtung handeln (z. B. in Form eines Messtasters). Dabei kann beispielsweise eine Messung und Bewertung der Teilung mit dem Ausrichtsensor der Maschine vorgenommen werden. Dies ist insbesondere beim Profilschleifen relevant, da hier durch Verschleiß der Schleifscheibe beim Schlichten Teilungssprünge entstehen können.

Neben dem bereits genannten Getriebeprüfstand kann alternativ auch eine Einflankenwälzprüfung in der weiteren Messvorrichtung vorgenommen werden. Alternativ ist die Messung mit einer Verzahnungsmessmaschine möglich. Als weitere Alternative kommt eine Messung an einem End-of-Line-Prüfstand infrage.

Das vorgeschlagene Verfahren kann auf spezielle Werkstücke bezogen bzw. reduziert werden. Die Auswahl der Werkstücke kann am Fertigungsprozess orientiert werden, wenn beispielsweise das erste oder das letzte Werkstück zwischen zwei Abrichtzyklen zur näheren Überprüfung herangezogen werden.

Die Auslösung der Vermessung in der weiteren Messvorrichtung kann dabei von speziellen Umständen abhängig gemacht werden. Dabei kann insbesondere das mit dem Sensor 4 erfasste Signal ausgewertet und auf dieser Basis dann eine Entscheidung darüber getroffen werden, ob eine nachfolgende Messung erfolgen soll. Hier kommt insbesondere die Auswertung des aufgenommenen Zeitsignals über eine Schwingungsanalyse in Betracht, bei der die Amplituden der Ordnungen der Schwingung betrachtet werden (insbesondere ermittelt mittels einer FFT). Bei Überschreiten vorgegebener maximaler Amplituden für die jeweiligen Ordnungen der Schwingung kann dann das Vermessen in der weiteren Messvorrichtung 6 ausgelöst werden.

Analoges gilt, wenn eine geometrische Größe vermessen wird, die über die Qualität der geschliffenen Verzahnung Auskunft geben kann.

Es können auch gezielte Meldungen über Unregelmäßigkeiten (beispielsweise Taumel der Schleifschnecke) dem Maschinenbediener ausgegeben werden.

Bei Toleranz- bzw. Grenzwertüberschreitung kann dem Maschinenbediener eine Warnung ausgegeben werden, das Werkstück kann zur weiteren Überprüfung ausgeschleust werden, das Werkstück kann als NIO ("Nicht in Ordnung") Bauteil ausgeschleust werden oder die Bearbeitung kann nach einer Anzahl vorgegebener Überschreitungen angehalten werden.

Zwischen der Maschine 3 und der weiteren Messvorrichtung 6 kann ein Datenaustausch vorgesehen werden. Dabei kann eine automatische und auch eine manuelle Übertragung der Daten vorgesehen werden.

Ferner kann eine Justage der Aktionsgrenzen bei Toleranz- bzw. Grenzwertüberschreitung für ein Fertigungslos durch Rückkopplung mit der weiteren Messvorrichtung (Getriebeprüfstand bzw. der Verzahnungsmessmaschine) vorgesehen werden.

Kennwerte bzw. ein Geräuschindex können werkstückbezogen abgespeichert werden, was gegebenenfalls eine verbesserte Teilerückverfolgung möglich macht.

Eine Detektion von geräuschverursachenden Abweichungen wird so möglich.

Es gibt zwei Szenarien, die auftreten können:
Bei einem ersten Szenario wird während der Bearbeitung eine auffällige Ordnung (oder mehrere), die über die Ordnungsanalyse in der Schleifmaschine bereitgestellt wurde, detektiert.

Bei einem zweiten Szenario wird in der nachgelagerten Beurteilung in der weiteren Messvorrichtung (beispielsweise Getriebeprüfstand oder Verzahnungsmessmaschine) eine auffällige Ordnung (oder mehrere) detektiert.

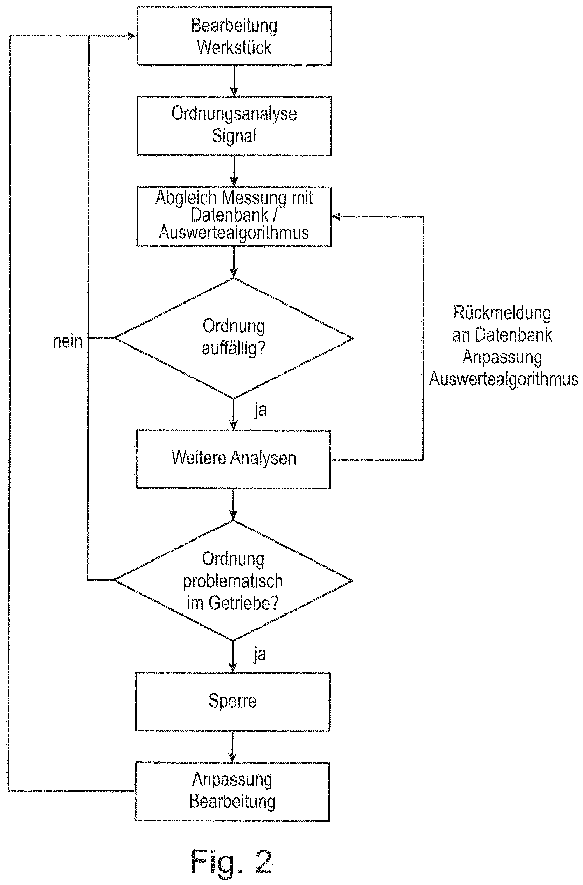

In beiden Fällen greifen ähnliche Mechanismen, wie sie in Figur 2 in Form eines Flussdiagramms illustriert sind. Die hier wiedergegebene Darstellung betrifft allerdings zunächst das erste Szenario.

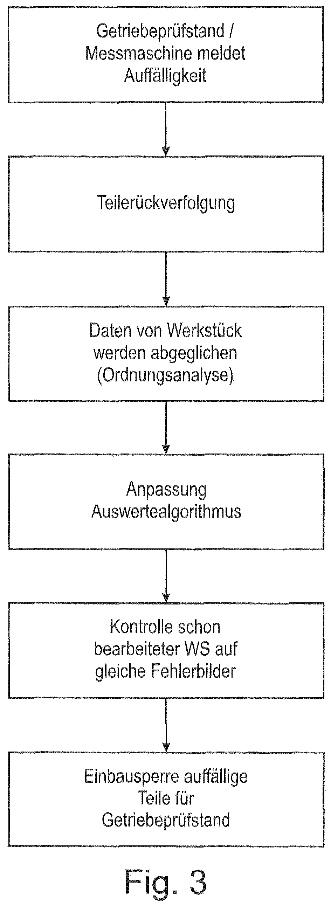

Zum zweiten Szenario wird auf Figur 3 hingewiesen.

Im Getriebeprüfstand 6 (oder von der Messmaschine) wird eine auffällige Ordnung gemeldet. Über die Teilerückverfolgung (beispielsweise mittels RFID oder einem anderen Code am Werkstück) wird der zugehörige Bearbeitungsprozess ermittelt. Die Ordnungen aus der externen Messung werden mit der Ordnungsanalyse in der Schleifmaschine abgeglichen.

Ebenso können aus den externen Messmitteln, wie dem Getriebeprüfstand, positive Ergebnisse (keine Ordnungen auffällig) an die Maschine rückgemeldet werden.

Zu den einzelnen Punkten der Szenarien sei folgendes angemerkt:
Die Messmethodik zur Fehlersuche bzw. zur Optimierung des Bearbeitungsprozesses kann wie folgt realisiert werden: Für auffällige Ordnungen können ungünstige Drehzahlverhältnisse verantwortlich sein. Aufgrund der vorliegenden Informationen über die einzelnen Maschinenkomponenten und Prozess- bzw. Betriebsparameter können die Ordnungen im Getriebeprüfstand auf die einzelnen Maschinenkomponenten (und deren Drehzahlen) rückgerechnet werden und die entsprechenden Drehzahlen angepasst werden.

Auch können Eigenresonanzen der Maschine zu auffälligen Ordnungen führen; mit Hilfe von an sich bekannten Condition Monitoring Tools in der Maschine können hier Abgleiche und Verbesserungen durchgeführt sowie Veränderungen einzelner Komponenten festgestellt werden.

Eine weitere Möglichkeit besteht darin, dass ein Messtaster (beispielsweise aus der Messeinrichtung) oder ein berührungsloser Sensor (beispielsweise ein induktiver Sensor, der auch für das Ausrichten verwendet wird) das Werkstück an einem vorgegebenen Prüfbund überprüft und somit auf Fehler, wie beispielsweise Rundlauffehler, aufmerksam macht.

Die Vorschläge für die Optimierung des Bearbeitungsprozesses können dabei sowohl projektspezifisch (Werkstück) als auch maschinenspezifisch sein.

Betreffend die Anpassung der Grenzen für die Überwachung bzw. Optimierung der Auswertealgorithmik sei folgendes angemerkt:
Aufgrund der Eigenheiten jedes Getriebes gibt es keine universelle Grenzkurve, die für alle Werkstücksorten gültig ist. Jede Werkstücksorte bzw. jeder Bearbeitungsprozess wird individuell angelernt. Zu Beginn der Anlernphase können die Grenzen (beispielsweise nach VDI/VDE 2612 Blatt 1) voreingestellt werden.

Die entstehenden Grenzen können sowohl global für die Maschine als auch werkstückspezifisch (projektbezogen) und dann maschinenunabhängig sein. Auch ist eine Kombination aus maschinen- und werkstückspezifischen Grenzen möglich.

Die Information, ob eine Ordnung auffällig ist, kann direkt aus der Verzahnungsschleifmaschine (beispielsweise mittels des Messtasters), aus dem Einflankenwälzprüfgerät, aus der Verzahnungsmessmaschine oder aus dem Getriebeprüfstand (höchste Gewichtung) kommen.

Im vorliegenden Falle soll der Schleifprozess hinsichtlich geräuschauffälliger Fehlerbilder überwacht werden. Hierfür werden die Prozesssignale (Stromistwert, Leistung, Drehzahlistwert der Werkstück- und Werkzeugachse) und Beschleunigungsaufnehmer (platziert auf Werkstück- und Werkzeugachse) gemessen und ausgewertet.

Die Auswertung der Prozesssignale erfolgt vorzugsweise mit Hilfe einer Ordnungsanalyse. Dabei werden die im Zeitbereich aufgenommenen Signale in den Frequenzbereich übertragen, vorzugsweise mittels der Fast-Fourier-Transformation (FFT), und dann mit Hilfe der gemessenen Bearbeitungsdrehzahl die Frequenzen in Ordnungen, bezogen auf die Werkstückumdrehung, umgerechnet.

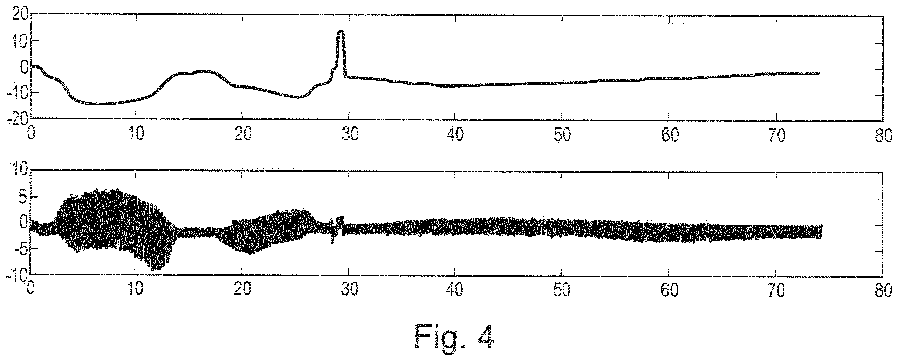

Insoweit wird Bezug genommen auf die Darstellungen in den Figuren 4 bis 8.

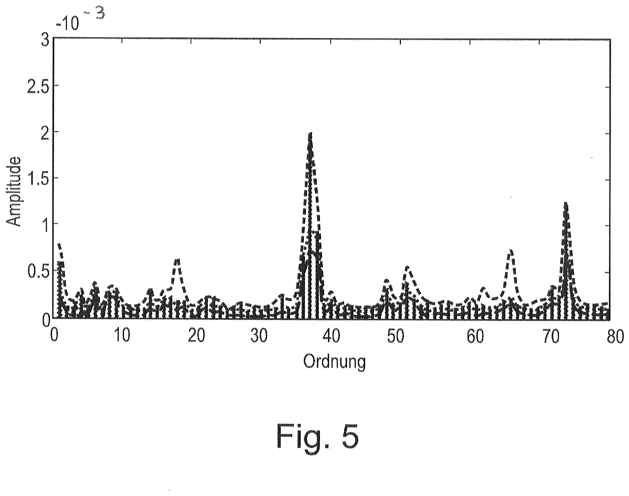

In Figur 4 dargestellt sind Sensorsignale im Zeitbereich, die dann, wie in Figur 5 zu sehen, in den Frequenzbereich per FFT übertragen wurden und aufzeigen, welche Amplitude bei welcher Ordnung der Schwingung vorliegt. Somit werden aus dem periodischen Zeitsignal die "Harmonischen" ermittelt, wobei die Amplitude der einzelnen Frequenzanteile des erfassten periodischen Signals über der Ordnung bestimmt werden.

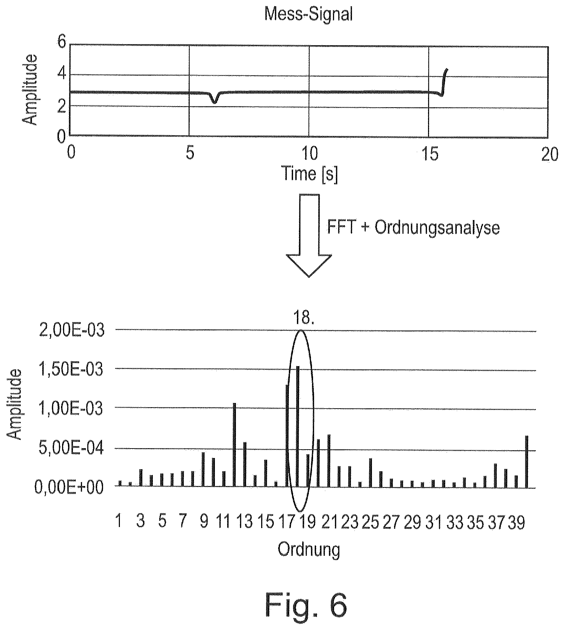

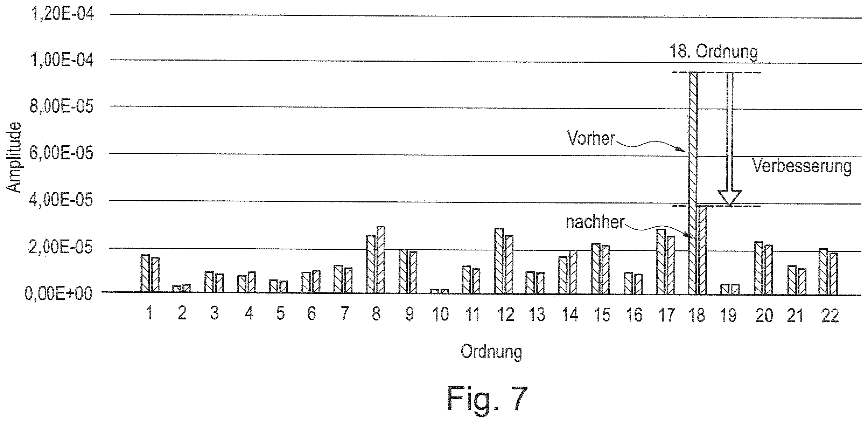

Analoges gilt für die Darstellung in Figur 6, bei der oben das Mess-Signal zu sehen ist, aus welchem die unten dargestellte Ordnungsanalyse abgeleitet wurde. Hier ist zu sehen, dass die 18. Ordnung auffällig groß ist. Werden Maßnahmen im Schleifprozess ergriffen, kann eine Verbesserung erreicht werden, wie es in Figur 7 dargestellt ist.

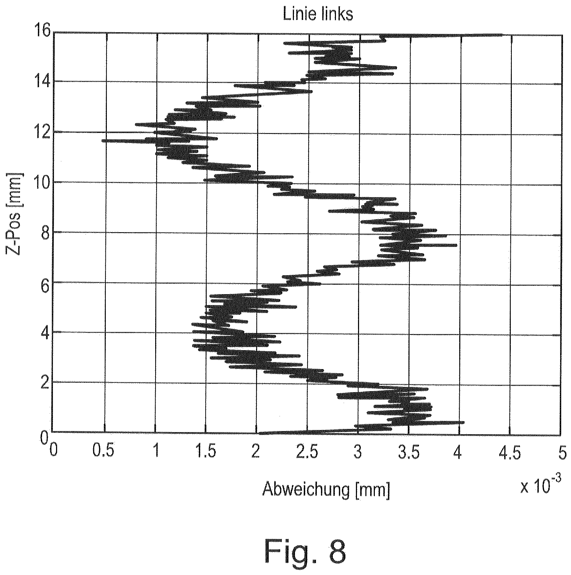

Figur 8 illustriert die Messung von Auffälligkeiten mit einem Messtaster direkt in der Schleifmaschine. Die zu erkennende überlagerte Schwingung kann eine nachteilige Feinwelligkeit auf die Zahnflanke aufbringen, welche zu Geräuschen im Einsatz der Verzahnung führen können; dies ist insbesondere im Bereich der Elektromobilität sehr nachteilhaft.

Alternativ zur Anwendung einer Fast Fourier Transformation (FFT) kann auch eine Wavelet-Transformation oder der Einsatz eines Ausgleichssinus vorgesehen werden.

Die (Toleranz)Grenzen, bis zu denen die Ordnung auffällig ist, kann sowohl explizit festgelegt werden als auch auf der Basis bisheriger Messungen. Des Weiteren besteht die Möglichkeit, dass durch den Informationsrückfluss von der weiteren Messvorrichtung (Getriebeprüfstand oder Verzahnungsmessmaschine) die Grenzen durch den Maschinenbediener angepasst werden können.

Wird im Bearbeitungsprozess eine "auffällige" Ordnung festgestellt, wird die Bearbeitung des aktuellen Bauteils abgeschlossen und eine Messung der geschliffenen Verzahnung veranlasst.

Ist keine auffällige Ordnung über die Verzahnungsmessung detektierbar, kann die Bearbeitung fortgesetzt werden und/oder das betreffende Bauteil umfangreicher extern untersucht werden.

Ist eine auffällige Ordnung vorhanden, so wird das Teil ausgeschleust und weitere Schritte zur Untersuchung werden eingeleitet. Sind x Bauteile (x durch den Anwender bzw. Kunden festgelegt) hintereinander auffällig, wird die weitere Bearbeitung automatisiert unterbrochen. Die weitere Bearbeitung muss dann durch einen Maschinenbediener freigegeben werden.

Dabei können auch weitere Untersuchungen vorgesehen werden, wobei das Werkstück auf der Verzahnungsmessmaschine hinsichtlich Welligkeiten untersucht wird bzw. wobei das Werkstück auf einem Einflankenwälzprüfstand untersucht wird bzw. wobei das Werkstück in das Getriebe eingebaut wird und über den EOL-Prüfstand untersucht wird.

Alle nachgelagerten Verfahren können entweder automatisch oder über eine manuelle Schnittstelle mit der Schleifmaschine kommunizieren.

Die zurückgelieferten Informationen aus den nachgelagerten Messungen können dem Schleifprozess zugeordnet werden (wodurch eine Teilerückverfolgung möglich wird) und beeinflussen die Grenzen der Ordnungsanalysen der Prozessüberwachung.

Die Ergebnisse des EOL-Prüfstands haben dabei vorzugsweise die höchste Priorität bei der Beeinflussung der Grenzen.

Bestätigen sich die Auffälligkeiten (oder aufgrund der ersten Auffälligkeiten in der Maschine), kann eine Optimierung des Bearbeitungsprozesses angestrebt werden.

Beispiele für eine derartige Optimierung des Bearbeitungsprozesses sind insbesondere die Anpassung der Bearbeitungsdrehzahl, der Gangzahl der Schnecke und die Vorschubgeschwindigkeit beim Schleifen, die Änderung der Unwuchtgrenzen und die Rundlaufoptimierung.

### Bezugszeichenliste:

- 1: Werkstück
- 2: Hartfeinbearbeitungswerkzeug (Schleifschnecke)
- 3: Hartfeinbearbeitungsmaschine
- 4: Sensor
- 5: Maschinensteuerung
- 6: weitere Messvorrichtung
- 7: Schallsensor

## Patentansprüche

1. Verfahren zum Hartfeinbearbeiten einer Verzahnung oder eines Profils eines Werkstücks (1) mittels eines Hartfeinbearbeitungswerkzeugs (2) in einer Hartfeinbearbeitungsmaschine (3), wobei das Werkstück (1) auf einer Werkstückspindel aufgespannt und mit dem Hartfeinbearbeitungswerkzeug (3) bearbeitet wird,
wobei bei oder nach der Bearbeitung des Werkstücks (1) in der Hartfeinbearbeitungsmaschine (3) mittels mindestens eines Sensors (4) oder einer Maschinensteuerung (5) mindestens ein Signal aufgenommen und in der Maschinensteuerung (5) gespeichert wird,
wobei in der Maschinensteuerung (5) ein Vergleich des gemessenen Signals oder mindestens einer hiervon abgeleiteten Größe mit gespeicherten Referenzdaten derart erfolgt, dass geprüft wird, ob das gemessene Signal oder die mindestens eine hiervon abgeleitete Größe innerhalb einer vorgegebenen Toleranz liegt,
**dadurch gekennzeichnet,**
**dass** im Falle dessen, dass das gemessene Signal oder die mindestens eine hiervon abgeleitete Größe zumindest teilweise außerhalb der vorgegebenen Toleranz liegt, nach der Bearbeitung des Werkstücks (1) ein Vermessen des Werkstücks (1) mittels einer weiteren Messvorrichtung (6) erfolgt.

2. Verfahren nach Anspruch 1, **dadurch gekennzeichnet, dass** das Vermessen auf der weiteren Messvorrichtung (6) innerhalb der Hartfeinbearbeitungsmaschine (3) erfolgt.

3. Verfahren nach Anspruch 2, **dadurch gekennzeichnet, dass** das Vermessen auf der weiteren Messvorrichtung (6) im auf der Werkstückspindel aufgespannten Zustand des Werkstücks (1) erfolgt.

4. Verfahren nach Anspruch 2 oder 3, **dadurch gekennzeichnet, dass** das Vermessen mittels einer maschineneigenen Verzahnungsmesseinrichtung erfolgt.

5. Verfahren nach Anspruch 2 oder 3, **dadurch gekennzeichnet, dass** das Vermessen mittels eines maschineneigenen Sensors erfolgt, mit dem die Ausrichtung des Werkstücks (1) hinsichtlich der zu bearbeitenden Verzahnung oder des zu bearbeitenden Profils erfolgt (Ausrichtsensor).

6. Verfahren nach Anspruch 1, **dadurch gekennzeichnet, dass** das Vermessen auf der weiteren Messvorrichtung (6) außerhalb der Hartfeinbearbeitungsmaschine (1) erfolgt.

7. Verfahren nach einem der Ansprüche 2 bis 6, **dadurch gekennzeichnet, dass** das Vermessen mittels eines taktilen Messtasters erfolgt.

8. Verfahren nach einem der Ansprüche 2 bis 6, **dadurch gekennzeichnet, dass** das Vermessen mittels eines berührungslosen Sensors erfolgt, insbesondere mittels eines induktiven, eines kapazitiven oder eines optischen Sensors.

9. Verfahren nach einem der Ansprüche 2 bis 6, **dadurch gekennzeichnet, dass** das Vermessen auf einem Einflankenwälzmessgerät erfolgt, wobei das Einflankenwälzmessgerät insbesondere Drehfehler bei der Rotation des Werkstücks (1) erfasst.

10. Verfahren nach Anspruch 6, **dadurch gekennzeichnet, dass** das Vermessen auf einer Verzahnungsmessmaschine erfolgt, wobei die Vermessung über eine vollständige Werkstückumdrehung erfolgt.

11. Verfahren nach Anspruch 6, **dadurch gekennzeichnet, dass** das Vermessen auf einem Getriebeprüfstand erfolgt, wobei in diesem die Schwingungserzeugung des Werkstücks (1) unter Betriebsbedingungen erfasst wird.

12. Verfahren nach Anspruch 11, **dadurch gekennzeichnet, dass** in dem Getriebeprüfstand ein mit der Schwingungserzeugung im Zusammenhang stehendes Signal erfasst wird.

13. Verfahren nach Anspruch 1 oder 12, **dadurch gekennzeichnet, dass** für das mittels des Sensors (4) oder mit der Maschinensteuerung (5) oder für das im Getriebeprüfstand aufgenommene Signal eine Analyse durchgeführt wird, die die Amplitude des Signals, insbesondere einer Schwingung, über der Ordnung ermittelt (Ordnungsanalyse).

14. Verfahren nach Anspruch 13, **dadurch gekennzeichnet, dass** die Amplitude der Schwingung über der Ordnung ermittelt wird, indem eine Fast-Fourier-Transformation (FFT) durchgeführt wird.

15. Verfahren nach einem der Ansprüche 1 bis 14, **dadurch gekennzeichnet, dass** das Hartfeinbearbeitungswerkzeug (2) ein Schleifwerkzeug, insbesondere eine Schleifschnecke, ist.

## Claims

1. Method for the hard fine machining of a toothing or a profile of a workpiece (1) by means of a hard fine machining tool (2) in a hard fine machining machine (3), wherein the workpiece (1) is clamped on a workpiece spindle and is machined by means of the hard fine machining tool (3),
wherein during or after the machining of the workpiece (1) in the hard fine machining machine (3) at least one signal is measured by means of at least one sensor (4) or a machine controller (5) and is stored in the machine controller (5),
wherein a comparison of the measured signal or at least one variable derived therefrom with stored reference data takes place in the machine controller (5) in such a way that it is checked whether the measured signal or the at least one variable derived therefrom lies within a predefined tolerance,
**characterized in**
**that** in the event that the measured signal or the at least one variable derived therefrom lies at least partially outside the predefined tolerance, the workpiece (1) is measured by means of an additional measuring device (6) after the machining of the workpiece (1).

2. Method according to claim 1, **characterised in that** the measuring is carried out on the additional measuring device (6) within the hard finishing machine (3).

3. Method according to claim 2, **characterised in that** the measuring on the additional measuring device (6) takes place in the state of the workpiece (1) clamped on the workpiece spindle.

4. Method according to claim 2 or 3, **characterised in that** the measuring is carried out by means of a machine's own gear measuring device.

5. Method according to claim 2 or 3, **characterised in that** the measuring is carried out by means of a machine's own sensor with which the alignment of the workpiece (1) with respect to the toothing or profile to be machined is carried out (alignment sensor).

6. Method according to claim 1, **characterised in that** the measuring is carried out on the additional measuring device (6) outside the hard finishing machine (1).

7. Method according to one of claims 2 to 6, **characterised in that** the measurement is carried out by means of a tactile measuring sensor.

8. Method according to one of claims 2 to 6, **characterised in that** the measurement is carried out by means of a contactless sensor, in particular by means of an inductive, a capacitive or an optical sensor.

9. Method according to one of claims 2 to 6, **characterised in that** the measuring is carried out on a single flank rolling measuring device, wherein the single flank rolling measuring device detects in particular rotational errors during the rotation of the workpiece (1).

10. Method according to claim 6, **characterised in that** the measuring is carried out on a gear measuring machine, wherein the measuring is carried out over one complete workpiece revolution.

11. Method according to claim 6, **characterised in that** the measurement is carried out on a transmission test bench, wherein in the same the vibration generation of the workpiece (1) is recorded under operating conditions.

12. Method according to claim 11, **characterised in that** a signal associated with vibration generation is detected in the transmission test rig.

13. Method according to claim 1 or 12, **characterised in that** an analysis is carried out for the signal recorded by means of the sensor (4) or with the machine controller (5) or for the signal recorded in the transmission test bench, which analysis determines the amplitude of the signal, in particular of an oscillation, above order (modal analysis).

14. Method according to claim 13, **characterized in that** the amplitude of the oscillation above order is determined by performing a Fast Fourier Transform (FFT).

15. Method according to one of claims 1 to 14, **characterised in that** the hard fine machining tool (2) is a grinding tool, in particular a grinding worm.

## Revendications

1. Procédé d'usinage fin dur d'une denture ou d'un profil d'une pièce (1) au moyen d'un outil d'usinage fin dur (2) dans une machine d'usinage fin dur (3), dans lequel la pièce (1) est fixée à une broche porte-pièce et est usinée à l'aide de l'outil d'usinage fin dur (3),
dans lequel, pendant ou après l'usinage de la pièce (1) dans la machine d'usinage fin dur (3), au moins un signal est enregistré au moyen d'au moins un capteur (4) ou d'un dispositif de commande de machine (5) et est mémorisé dans le dispositif de commande de machine (5),
dans lequel, dans le dispositif de commande de machine (5), une comparaison du signal mesuré ou au moins d'une grandeur dérivée de celui-ci avec des données de référence mémorisées est effectuée de façon à vérifier si le signal mesuré ou ladite au moins une grandeur dérivée de celui-ci est comprise dans une tolérance prédéfinie et,
**caractérisé en ce que** dans le cas où le signal mesuré ou ladite au moins une grandeur dérivée de celui-ci se trouve au moins partiellement à l'extérieur de la tolérance prédéfinie, un mesurage de la pièce (1) est effectué au moyen d'un dispositif de mesure supplémentaire (6) après l'usinage de la pièce (1).

2. Procédé selon la revendication 1, **caractérisé en ce que** le mesurage est effectué sur le dispositif de mesure supplémentaire (6) à l'intérieur de la machine d'usinage fin dur (3).

3. Procédé selon la revendication 2, **caractérisé en ce que** le mesurage est effectué sur le dispositif de mesure supplémentaire (6) à l'état où la pièce (1) est fixée à la broche porte-pièce.

4. Procédé selon la revendication 2 ou 3, **caractérisé en ce que** le mesurage est effectué au moyen d'un dispositif de mesure de denture propre à la machine.

5. Procédé selon la revendication 2 ou 3, **caractérisé en ce que** le mesurage est effectué au moyen d'un capteur propre à la machine, à l'aide duquel l'orientation de la pièce (1) par rapport à la denture à usiner ou au profil à usiner est effectuée (capteur d'orientation).

6. Procédé selon la revendication 1, **caractérisé en ce que** le mesurage est effectué sur le dispositif de mesure supplémentaire (6) à l'extérieur de la machine d'usinage fin dur (1).

7. Procédé selon l'une quelconque des revendications 2 à 6, **caractérisé en ce que** le mesurage est effectué au moyen d'une sonde de mesure tactile.

8. Procédé selon l'une quelconque des revendications 2 à 6, **caractérisé en ce que** le mesurage est effectué au moyen d'un capteur sans contact, en particulier au moyen d'un capteur inductif, d'un capteur capacitif ou d'un capteur optique.

9. Procédé selon l'une quelconque des revendications 2 à 6, **caractérisé en ce que** le mesurage est effectué sur un appareil de mesure en développante d'un seul flanc, l'appareil de mesure en développante d'un flanc détectant en particulier des erreurs de rotation lors de la rotation de la pièce (1).

10. Procédé selon la revendication 6, **caractérisé en ce que** le mesurage est effectué sur une machine de mesure d'engrènement, le mesurage étant effectué sur un tour complet de la pièce.

11. Procédé selon la revendication 6, **caractérisé en ce que** le mesurage est effectué sur un banc d'essai de transmission, dans lequel la génération de vibration de la pièce (1) dans des conditions opérationnelles est détectée sur celui-ci.

12. Procédé selon la revendication 11, **caractérisé en ce qu'**un signal en relation avec la génération de vibration est détecté sur le banc d'essai de transmission.

13. Procédé selon la revendication 1 ou 12, **caractérisé en ce que** pour le signal enregistré au moyen du capteur (4) ou à l'aide du dispositif de commande de machine (5) ou enregistré sur le banc d'essai de transmission, une analyse est effectuée qui établit l'amplitude du signal, en particulier d'une vibration, par l'intermédiaire de l'ordre (suivi d'ordre).

14. Procédé selon la revendication 13, **caractérisé en ce que** l'amplitude de la vibration est établie par l'intermédiaire de l'ordre en effectuant une transformation de Fourier rapide (FFT).

15. Procédé selon l'une quelconque des revendications 1 à 14, **caractérisé en ce que** l'outil d'usinage fin dur (2) est un outil de meulage, en particulier une vis sans fin de meulage.
